Europäisches Patentamt

(19) **European Patent Office**

**Office européen des brevets**

(11) Veröffentlichungsnummer: **0 045 030**
**B1**

(12) **EUROPÄISCHE PATENTSCHRIFT**

(45) Veröffentlichungstag der Patentschrift:.
06.03.85

(51) Int. Cl.⁴: **A 01 B 63/24,** A 01 B 3/42

(21) Anmeldenummer: 81105695.1

(22) Anmeldetag: 20.07.81

(54) Anbaudrehpflug.

(30) Priorität: 24.07.80 DE 3028094

(43) Veröffentlichungstag der Anmeldung:
03.02.82 Patentblatt 82/5

(45) Bekanntmachung des Hinweises auf die Patenterteilung:
06.03.85 Patentblatt 85/10

(84) Benannte Vertragsstaaten:
AT FR GB IT

(56) Entgegenhaltungen:
DE - A - 2 738 816
DE - B - 19 107
DE - B - 1 242 032
DE - U - 7 830 864
FR - A - 1 300 926

(73) Patentinhaber: **Johann Gassner K.G., Post
Grosshelfendorf, D-8011 Göggenhofen (DE)**

(72) Erfinder: **Gassner, Benno, D-8011 Göggenhofen (DE)**

(74) Vertreter: **Lamprecht, Helmut, Dipl.-Ing.,
Corneliusstrasse 42, D-8000 München 5 (DE)**

## Beschreibung

Die Erfindung betrifft einen Anbaudrehpflug mit einem mit einem Zufahrzeug verbindbaren Anbaubock und mit einem die Pflugkörper tragenden Pflugrahmen, welcher um eine etwa horizontale Drehachse gegenüber dem Anbaubock in seine beiden Arbeitsstellungen drehbar ist, wobei der Pflugrahmen in einer in seiner einen oder anderen Arbeitsstellung etwa horizontalen Ebene in seiner Winkelstellung gegenüber dem Anbaubock verstellbar ist.

Bei Anbaupflügen verläuft die Drehachse zur Überführung des Pflugrahmens aus seiner einen in die andere Arbeitsstellung etwa in der Fahrtrichtung des Zugfahrzeugs, wobei mit zunehmender Länge des Pfluges bedingt durch die seitliche gestaffelte Anordnung der Pflugkörper der Schwerpunkt des zu drehenden Pflugrahmens immer weiter aus dem Bereich der Drehachse seitlich auswandert, wodurch wiederum das für den Drehvorgang aufzubringende Drehmoment zunimmt, wodurch auch der Drehmechanismus zur Aufnahme entsprechend großer Kräfte ausgelegt werden muß.

Besonders ungünstig wirken sich diese Verhältnisse bei sogenannten Vorderpflügen aus, d. h. bei Pflügen, welche an der Frontseite eines Fahrzeugs befestigt werden, weil diese Pflüge in besonders starkem Maße seitlich zur Fahrzeugmittelachse versetzt angeordnet sind.

Bei einem durch die DE-A-2 738 816 bekanntgewordenen Anbaudrehpflug der eingangs beschriebenen Art hat man versucht, die geschilderten Probleme dadurch zu überwinden, daß der Pflugrahmen vor dem Drehvorgang in einer in den beiden Arbeitsstellungen des Pflugrahmens etwa horizontalen Ebene derart verschwenkt wird, daß der Schwerpunkt der zu drehenden Masse möglichst nahe an die Drehachse herangeführt wird. Nach dem Drehvorgang wird der Pflugrahmen wieder in seine arbeitsrichtige Lage seitlich ausgeschwenkt. Zu diesem Zweck ist am vorderen Ende des Pflugrahmens um eine in den Arbeitsstellungen des Pflugrahmens etwa vertikale Achse verschwenkbar ein Zwischenstück angelenkt, das seinerseits zur gemeinsamen Drehbewegung mit der im Anbaubock gelagerten Drehachse verbunden ist.

Bei dieser bekannten Konstruktion wird zwar beim Drehvorgang selbst nur eine relativ geringe Antriebskraft benötigt, weil das zu überwindende Drehmoment durch die Verlagerung des Schwerpunkts in Richtung auf die Drehachse gering ist, es muß aber trotzdem der Drehmechanismus entsprechend dem großen Schwerpunktsabstand von der Drehachse in den beiden Arbeitsstellungen zur Aufnahme großer Kräfte ausgelegt werden, weil der Pflugrahmen vor dem Absenken wieder in seine Arbeitsstellung ausgeschwenkt wird und das dadurch entsprechend erhöhte Drehmoment entweder über den Drehmechanismus oder durch besondere mechanische Sicherungen abgestützt werden muß.

Der Erfindung liegt die Aufgabe zugrunde, einen Anbaudrehpflug der eingangs beschriebenen Art derart auszugestalten, daß das vom Pflugrahmen um die Drehachse ausgeübte und gegebenenfalls abzustützende Drehmoment weitgehend reduziert und praktisch aufgehoben ist, so daß der Drehmechanismus nur zur Ausübung und Aufnahme verhältnismäßig geringer Kräfte ausgelegt werden muß.

Die Lösung dieser Aufgabe besteht darin, daß die Drehachse zumindest annähernd stets durch den Schwerpunkt des Pflugrahmens verläuft und um eine etwa vertikale Achse gegenüber dem Anbaubock verschwenkbar ist.

Im Gegensatz zu der erwähnten bekannten Konstruktion, bei welcher der Schwerpunkt nur für die Zeitdauer des Drehvorgangs in den Bereich der Drehachse verlagert wird, verläuft bei der erfindungsgemäßen Konstruktion die Drehachse ständig durch den Schwerpunkt. Da die Drehachse deshalb im Grundriß in einem mehr oder minder großen Winkel zur Längsrichtung des Fahrzeugs verläuft, muß die Drehachse selbst beim Wechsel der Arbeitsrichtung über die Fahrzeuglängsachse hinweg verlagert werden. Dies geschieht durch die verschwenkbare Lagerung der Drehachse am Anbaubock. Vorzugsweise ist der Pflugrahmen in der horizontalen Ebene in seiner Winkelstellung gegenüber der Drehachse einstellbar, was einerseits zur Veränderung der Schnittbreite vorteilhaft ist, andererseits aber auch eine Veränderung der Zahl der Pflugkörper ermöglicht, weil der Pflugrahmen sich jederzeit so einstellen läßt, daß die Drehachse durch den jeweiligen Schwerpunkt verläuft.

Eine weitere zweckmäßige Ausgestaltung besteht darin, daß am Anbaubock dem Pflugrahmen zugeordnete Anschläge vorgesehen sind, welche den Schwenkwinkel der Drehachse gegenüber dem Pflugkopf um die etwa vertikale Achse begrenzen. Dies dient ebenfalls der Schnittbreiteneinstellung, weil beim Verschwenken der Drehachse in die eine oder andere Arbeitsstellung die Wirkung der Schwenkvorrichtung durch diese Anschläge begrenzt wird und somit der Pflugrahmen insgesamt eine durch diese Anschläge bestimmte Schrägstellung gegenüber der Fahrtrichtung einnimmt.

Besonders zweckmäßig ist es dabei, daß als Stellorgan zur Verschwenkung der Drehachse gegen den Anbaubock ein doppelt wirkender Hydraulikzylinder oder zwei einfach wirkende Hydraulikzylinder vorgesehen sind, welche derart an eine Druckquelle angeschlossen sind, daß nach einem Stellvorgang die Druckbeaufschlagung in der diesem Stellvorgang entsprechenden Richtung bis zur Einleitung des nächsten Stellvorgangs erhalten bleibt.

Anhand der nun folgenden Beschreibung eines in der Zeichnung dargestellten Ausführungsbeispiels der Erfindung wird diese näher erläutert.

Es zeigt:

Fig. 1 eine schematische Draufsicht auf einen Schlepper mit einem Vorderpflug und einem vorderen und einem hinteren Anbaudrehpflug,

Fig. 2 eine abgeänderte Form der Anordnung des Vorderpflugs am Schlepper in einer im Maßstab vergrößerten Draufsicht und

Fig. 3 eine Seitenansicht des Schleppers mit dem Anbaubereich des vorderen Anbaudrehpflugs.

Ein Zugfahrzeug 10, beispielsweise ein Schlepper, ist mit einem hinteren Anbaudrehpflug 12a und gegebenenfalls auch mit einem vorderen Anbaudrehpflug 12b versehen, wobei jeder dieser Anbaudrehpflüge 12a und 12b jeweils einen Anbaubock 14a bzw. 14b und einen gegenüber diesem Anbaubock 14a bzw. 14b um eine etwa horizontale Drehachse 16a bzw. 16b in seine beiden Arbeitsstellungen bewegbaren Pflugrahmen 18a bzw. 18b besitzt.

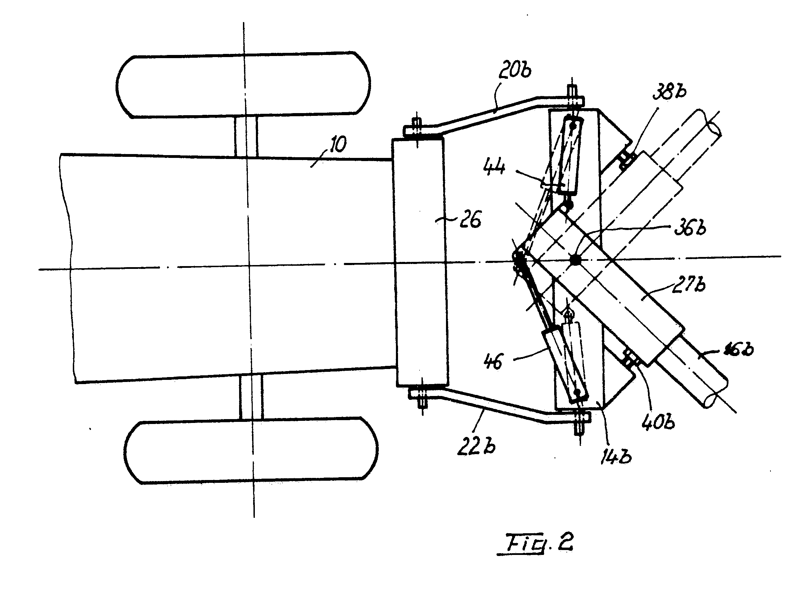

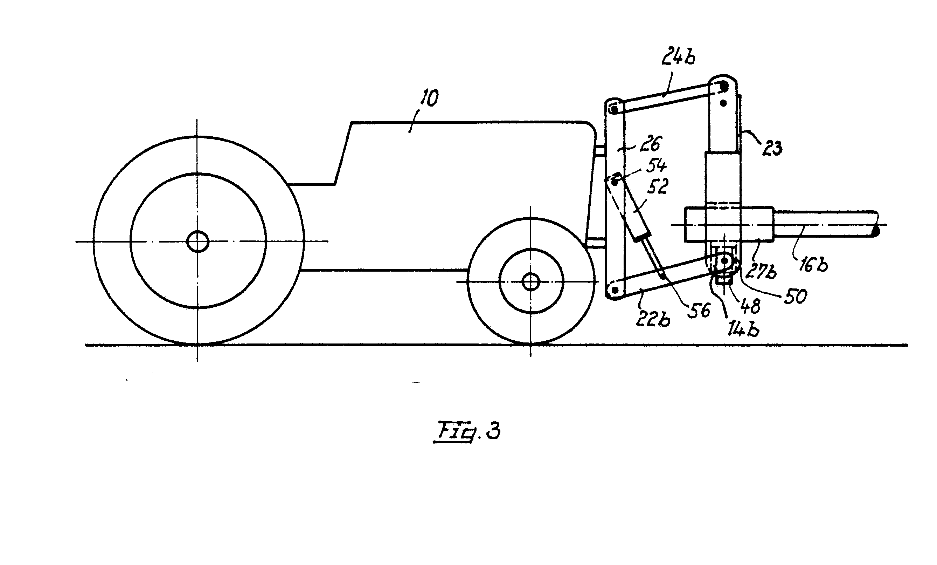

Der Anbaubock 14a des hinteren Pfluges 12a ist über Unterlenker 20a und 22a und einen zur besseren Übersichtlichkeit nicht dargestellten Oberlenker mit dem Zugfahrzeug 10 heb- und senkbar verbunden. Der Anbaubock 14b des vorderen Pfluges 12b ist über Unterlenker 20b und 22b, sowie über einen mit dem nachfolgend noch erwähnten Drehlager 27b verbundenen vertikalen Arm 23 und einen Oberlenker 24b einer am Zugfahrzeug 10 angebrachten Aushubvorrichtung 26 (Fig. 2 und 3) mit dem Zugfahrzeug heb- und senkbar verbunden.

Die Drehlagerung des Pflugrahmens 18a bzw. 18b gegenüber dem Anbaubock 14a bzw. 14b ist lediglich schematisch dargestellt durch ein am Anbaubock 14a bzw. 14b angeordnetes Drehlager 27a bzw. 27b und die darin drehbar gelagerte Drehachse 16a bzw. 16b. In der Praxis kann beispielsweise statt des hier gezeigten Drehlagers 27a bzw. 27b am Anbaubock 14a bzw. 14b eine Welle angebracht sein, die sich durch den Pflugrahmen erstreckt und auf der der Pflugrahmen mit zwei mit axialem Abstand voneinander angeordneten Lagern drehbar gelagert ist.

Um in Arbeitsstellung der Pflüge eine Winkelverstellung der Pflugrahmen 18a bzw. 18b gegenüber der Drehachse 16a bzw. 16b vornehmen zu können, beispielsweise zur Einstellung der Schnittbreite, sind an jedem Pflugrahmen mit einem auf die Drehachse 16a bzw. 16b bezogenen axialen Abstand voneinander zwei Stellspindeln 28a und 30a bzw. 28b und 30b gelagert, die an einem Ende mit Kurbeln 32a und 34a bzw. 32b und 34b versehen sind und deren andere Enden an der Drehachse 16a bzw. 16b angreifen. Die Spindeln 28a, 30a, 28b und 30b sind entweder gegenüber dem Pflugrahmen 18a bzw. 18b oder gegenüber der Drehachse 16a bzw. 16b verstellbar, um die erwähnte Winkelverstellung vornehmen zu können, mit welcher nicht nur die Schnittbreite verändert sondern auch die Drehachse 16a bzw. 16b jeweils so gegenüber dem Pflugrahmen 18a bzw. 18b verstellt werden kann, daß die Drehachse 16a bzw. 16b jeweils durch den Schwerpunkt S des Pflugrahmens verläuft.

Die Drehlager 26a und 26b sind jeweils um eine etwa vertikale Achse 36a bzw. 36b gegenüber dem zugehörigen Anbaubock 14a bzw. 14b verschwenkbar, wobei der Schwenkbereich durch einstellbare Anschläge 38a und 40a bzw. 38b und 40b begrenzt wird.

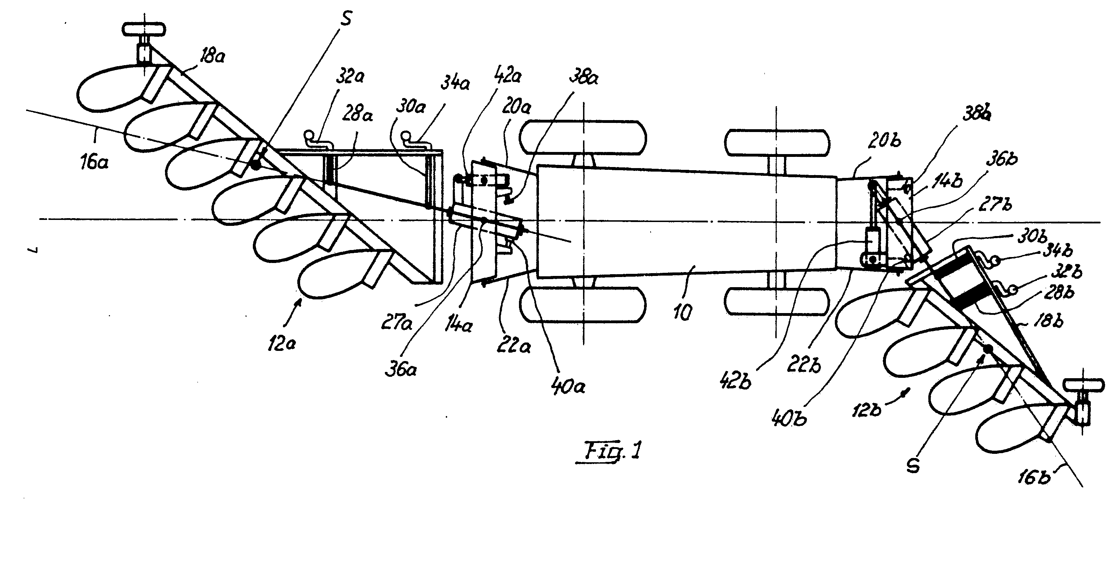

Zur Durchführung der Schwenkbewegung ist ein Antrieb vorgesehen, und zwar entweder ein doppelt-wirkender Hydraulikzylinder 42a bzw. 42b beim in Fig. 1 gezeigten Beispiel, oder zwei einfach-wirkende Hydraulikzylinder 44 und 46, wie sie für den vorderen Pflug in Fig. 2 gezeigt sind. Die Hydraulikzylinder 42a, 42b, 44 und 46 greifen gelenkig jeweils einerseits am Anbaubock 14a bzw. 14b und andererseits am Drehlager 27a bzw. 27b an.

In Fig. 3 ist für den Fall des vorderen Anbaudrehpfluges 12b schematisch gezeigt, daß das Drehlager 27b mit einem Schwenkzapfen 48 versehen ist, welcher in vertikaler Richtung nach unten in ein Schwenklager 50 am Anbaubock 14b eingreift. Zur Durchführung der Aushubbewegung ist ein Hydraulikzylinder 52 vorgesehen, der einerseits bei 54 an der Aushubvorrichtung 26 und damit am Zugfahrzeug 10 und andererseits bei 56 am Unterlenker 22b angreift.

Wie aus Fig. 1 ersichtlich ist, ist die Anordnung jeweils derart getroffen, daß die Drehachse 16a bzw. 16b durch den Schwerpunkt S des hinteren Pflugrahmens 18a bzw. des vorderen Pflugrahmens 18b verläuft, wobei unter dem Sammelbegriff »Pflugrahmen« auch alle mit dem Pflugrahmen zur gemeinsamen Drehbewegung verbundenen Teile verstanden werden. Zum Ausgleich von Fertigungsungenauigkeiten aber auch zur Anpassung an unterschiedliche Schwerpunktspositionen beim Anbau oder Abbau von Pflugkörpern kann der Pflugrahmen 18a bzw. 18b in seiner Position gegenüber der Drehachse 16a bzw. 16b ausgerichtet werden. Bei einer Veränderung der gegenseitigen Lage von Pflugrahmen und Drehachse kann man zur Einstellung der gewünschten Schnittbreite die Anschläge 38a und 40a bzw. 38b und 40b verstellen. Die zum Verschwenken der Drehachse 16a bzw. 16b um die vertikale Achse 36a bzw. 36b bestimmten Hydraulikzylinder 42a bzw. 42b oder 44 und 46 werden die Drehachse so weit ausschwenken, daß der Pflugrahmen 18a bzw. 18b an einem der Anschläge 38a, 40a bzw. 38b, 40b anschlägt, wodurch die Schnittbreite des Pfluges bestimmt wird, weil die Druckbeaufschlagung der Hydraulikzylinder während des Pflügens aufrechterhalten wird und dadurch der Pflugrahmen 18a bzw. 18b in seiner Anlage an dem jeweiligen Anschlag festgehalten wird. Erst beim Umschwenken der Drehachse 16a bzw. 16b in die andere Arbeitsstellung wird die Beaufschlagung der Zylinder umgekehrt.

Es bleibt dem Fachmann überlassen, ob die Schwenkbewegung der Drehachsen 16a bzw. 16b um die vertikalen Achsen 36a bzw. 36b gleichzeitig mit dem Drehvorgang oder aber gegenüber dem Drehvorgang zeitlich versetzt ablaufen soll. Außerdem bleibt es dem Fachmann überlassen, ob er einen getrennten Antrieb für den Schwenkvorgang der Drehachse und die Drehung des Pflugrahmens vorsieht, oder ob für beide Bewegungsabläufe ein kombinierter Antrieb vorgesehen wird.

Da jederzeit die Möglichkeit besteht, die Gesamtanordnung so nachzujustieren, daß die Drehachse stets durch den Schwerpunkt der zu drehenden Masse verläuft, kann der Drehantrieb und -mechanismus relativ schwach dimensioniert werden, weil theoretisch nur die Reibungswiderstände und ein aus möglichen Verschmutzungen resultierendes Moment überwunden werden müssen.

## Patentansprüche

1. Anbaudrehpflug mit einem mit einem Zugfahrzeug (10) verbindbaren Anbaubock (14a, 14b) und mit einem die Pflugkörper tragenden Pflugrahmen (18a, 18b), welcher um eine etwa horizontale Drehachse (16a, 16b) gegenüber dem Anbaubock (14a, 14b) in seine beiden Arbeitsstellungen drehbar ist, wobei der Pflugrahmen (18a, 18b) in einer in seiner einen oder anderen Arbeitsstellung etwa horizontalen Ebene in seiner Winkelstellung gegenüber dem Anbaubock (14a, 14b) verstellbar ist, dadurch gekennzeichnet, daß die Drehachse (16a, 16b) zumindest annähernd stets durch den Schwerpunkt (S) des Pflugrahmens (18a, 18b) verläuft und um eine etwa vertikale Achse (36a, 36b) gegenüber dem Anbaubock (14a, 14b) verschwenkbar ist.

2. Anbaudrehpflug nach Anspruch 1, dadurch gekennzeichnet, daß der Pflugrahmen (18a, 18b) in der horizontalen Ebene in seiner Winkelstellung gegenüber der Drehachse (16a, 16b) einstellbar ist.

3. Anbaudrehpflug nach einem der vorhergehenden Ansprüche, dadurch gekennzeichnet, daß am Anbaubock (14a, 14b) dem Pflugrahmen (18a, 18b) zugeordnete Anschläge (38a, 40a, 38b, 40b) vorgesehen sind, welche den Schwenkwinkel der Drehachse (16a, 16b) gegenüber dem Anbaubock (14a, 14b) um die etwa vertikale Achse (36a, 36b) begrenzen.

4. Anbaudrehpflug nach einem der vorhergehenden Ansprüche, dadurch gekennzeichnet, daß als Stellorgan zur Verschwenkung der Drehachse (16a, 16b) gegenüber dem Anbaubock (14a, 14b) ein doppelt-wirkender Hydraulikzylinder (42a, 42b) oder zwei einfachwirkende Hydraulikzylinder (44, 46) vorgesehen sind, welche derart an eine Druckquelle angeschlossen sind, daß nach einem Stellvorgang die Druckbeaufschlagung in der diesem Stellvorgang entsprechenden Richtung bis zur Einleitung des nächsten Stellvorgangs erhalten bleibt.

## Claims

1. Mounted turnover plough comprising a mounting support (14a, 14b) suitable for being attached to a tractor and a mounting frame (18a, 18b) carrying the shares and being privotable in its one or its other operative position with respect to said mounting support (14a, 14b) around a pivot axle (16a, 16b) extending substantially in a horizontal direction, the angular position of said mounting frame (18a, 18b) with respect to said mounting support (14a, 14b) being adjustable in a plane extending horizontally when the mounting frame (18a, 18b) is in its one or its other operative position, characterized in that the pivot axle (16a, 16b) always extends at least approximately through the centre of gravity (S) of said mounting frame (18a, 18b) and is pivotable with respect to the mounting support (14a, 14b) around a substantially vertical axle (36a, 36b).

2. Mounted turnover plough as claimed in claim 1, characterized in that the angular position of the mounting frame (18a, 18b) with respect to the pivot axle (16a, 16b) is adjustable in said horizontal plane.

3. Mounted turnover plough as claimed in one of claims 1 or 2, characterized in that stops (38a, 40a, 38b, 40b) are provided co-operating with the mounting frame (18a, 18b) in order to limitate the angle of motion of the pivot axle (16a, 16b) around said substantially vertical axle (36a, 36b) with respect to the mounting support (14a, 14b).

4. Mounted turnover plough as claimed in one of claims 1—3, characterized in that a double-acting hydraulic cylinder (42a, 42b) or two single acting hydraulic cylinders (44, 46) are provided as an adjusting element serving to pivot the pivot axle (16a, 16b) with respect to the mounting support said cylinder or cylinders, respectively, being connected to a source of pressure in such a manner as to maintain the pressure acting in the direction of an adjustment after said adjustment has been completed until the next adjustment is initiated.

## Revendications

1. Charrue portée brabant comportant une tête (14a, 14b) pouvant être accouplée à un véhicule tracteur (10) et un châssis (18a, 18b) portant les socs, monté à rotation dans ses deux positions de travail par rapport à la tête (14a, 14b) autour d'un axe de pivotement (16a, 16b) s'étendant sensiblement horizontalement, dans l'un ou l'autre des ses positions de travail le châssis portesocs (18a, 18b) peut être réglé angulairement par rapport à la tête (14a, 14b) dans un plan sensiblement horizontal, caractérisé en ce que l'axe de pivotement (16a, 16b) s'étendant toujours sensiblement au travers de le centre de gravité (S) du châssis porte-socs (18a, 18b) et qui est pivotant par rapport à la tête (14a, 14b) autour d'un axe (36a, 36b) s'étendant sensiblement vertical.

2. Charrue portée brabant suivant la revendication 1 caractérisé en ce que le châssis portesocs (18a, 18b) peut être réglé angulairement par rapport à l'axe de pivotement (16a, 16b) dans le plan horizontal.

3. Charrue portée brabant suivant l'une quelconque des revendications 1 ou 2 caractérisé en ce que les butées (38a, 40a, 38b, 40b) associés au châssis portesocs (18a, 18b) sont prévu a la tête (14a, 14b), qui limitent l'angle de pivotement de l'axe de pivotement (16a, 16b) autour de l'axe (36a, 36b) sensiblement vertical par rapport à la tête.

4. Charrue portée brabant suivant l'une quelconque des revendications 1—3 caractérisé en ce que un vérin hydraulic à double effet (42a, 42b) ou deux vérins hydraulics a simple effet (44, 46) sont prévu à servir comme l'organe d'actionnement pour le pivotement de l'axe de pivotement (16a, 16b) par rapport à la tête (14a, 14b); ces vérins communiques avec une source de pression de tel manière que après un actionnement la pression est maintenue dans la direction de cet actionnement jusqu'au commencement de l'actionnement suivant.

Fig. 1

_Fig. 2_

Fig.3